# EUROPÄISCHE PATENTSCHRIFT

(11) **EP 1 999 043 B1**
(45) Veröffentlichungstag und Bekanntmachung des Hinweises auf die Patenterteilung: **10.03.2010**
(21) Anmeldenummer: 07702365.3
(22) Anmeldetag: 18.01.2007
(51) Int. Cl.: B65G 17/42, B65G 19/02, B65G 19/24, B65G 47/26

(54) **WERKSTÜCKTRÄGERSYSTEM**
WORKPIECE SUPPORT SYSTEM
SYSTEME PORTE-PIÈCES

(30) Priorität: 01.02.2006 DE 102006004921
(43) Veröffentlichungstag der Anmeldung: 10.12.2008
(73) Patentinhaber: Leiritz, Otto, 91788 Pappenheim (DE)
(72) Erfinder: Leiritz, Otto, 91788 Pappenheim (DE)
(74) Vertreter: Sroka, Peter-Christian
(86) Internationale Anmeldenummer: PCT/DE2007/000084
(87) Internationale Veröffentlichungsnummer: WO 2007/087779

(56) Entgegenhaltungen:
- EP-A1- 0 734 976
- FR-A1- 2 645 131
- GB-A- 1 175 786

## Beschreibung

Die Erfindung betrifft ein Werkstückträgersystem mit den Merkmalen aus dem Oberbegriff des Patentanspruchs 1, wie es aus der GB 1 175 786 A bekannt ist.

Werkstückträgersysteme werden verwendet, um Werkstücke zu verschiedenen Arbeitsstationen zu transportieren, wie beispielsweise bei einer Fertigungsstraße. Bekannt sind Werkstückträgersysteme, welche bei Staubetrieb mit lose angetriebenen Werkstückträgern über mehrere Vorschubeinrichtungen angetrieben werden. Dabei kann die Oberseite des Werkstückträgers immer oben bleiben. Diese Werkstückträger laufen entweder nebeneinander (die Werkstückträger laufen in einer Ebene), übereinander (die Werkstückträger laufen in verschiedenen Ebenen) oder in Sonderfällen aus einem kombinierten System (die Werkstückträger laufen z.B. in einer Ebene und werden von einem Hubsystem in weitere Ebenen gehoben). Dazu wird für jede Ebene (Ausnahmefall: Schwerkraftrollenbahn) und jedes Hubsystem ein Antrieb benötigt.

Die DE 1718135 U beschreibt ein Werkstückträgersystem, bei dem die Werkstückträger als Wagen ausgeführt sind, welche auf Schienen laufen und an ein endloses Transportband angeschlossen sind. Erreichen die Wagen das Ende der Fertigungsstraße, werden sie wieder an den Anfang der Fertigungsstraße zurückgeführt. Die Rückführung wird mittels einer Brücke über der Fertigungsstraße erreicht. Die Brücke ist vom Ende der Straße bis zum Anfang der Straße geneigt angeordnet und wird von zwei Ständern getragen, die am Anfang und am Ende der Straße angeordnet sind. Die Ständer beinhalten Aufzüge als Hubsysteme, deren Aufgabe es ist, die Wagen am Ende der Fertigungsstraße zur Rückfübrungsbrücke emporzuheben und sie nach dem Durchlaufen derselben wieder auf die Fertigungsstraße abzusenken. Die Werkstückträger laufen also in verschiedenen Ebenen, für die ein Hubsystem verwendet werden muss. Die Hubsysteme benötigen jeweils einen Antrieb, wodurch diese Ausgestaltung des Werkstückträgersystems teuer und aufwändig ist.

Ein anderes in der DE 30 29 620 A beschriebenes Werkstückträgersystem beinhaltet ein Maschinengestell, in dem ein endloses, angetriebenes Zugmittel, insbesondere eine Kette, geführt wird, von der die insbesondere auf ihr abgestützten Werkstückträger durch Friktionskraft mitgenommen werden. Die Kette wird an zwei Umlenkstellen umgelenkt, von denen eine angetrieben ist.

Bei Werkstückträgersystemen ist generell problematisch, dass ein Stau von Werkstückträgern auftreten kann. In dieser Situation sollten die Werkstückträger vom Zugmittel entkoppelt werden. Die DE 94 21 998 U1 beschreibt ein Werkstückträgersystem, bei dem die Werkstückträger mit dem Zugmittel außer Eingriff bringbar sind. Hierfür sind feststehende Halte- und Entlastungselemente vorgesehen, durch welche die vorbeilaufenden Werkstücksträger, welche über Reibschluss mit dem Zugmittel bewegt werden, mit dem Zugmittel außer Eingriff gebracht werden können. Durch die Halte- und Entlastungselemente werden die Werkstückträger vertikal angehoben, so dass der Reibschluss zwischen Werkstückträger, und Zugmittel aufgehoben wird.

Die CH 669 167 A5 beschreibt ein in nur einer Ebene laufendes Werkstückträgersystem, bei welchem ein Zugmittel über einen Reibschuh einen Werkstückträger mitführt. Damit nicht das gesamte Gewicht des Werkstücks und des Werkstückträgers auf dem Zugmittel lastet, ist vorgesehen, dass ein einstellbarer Lastteil durch Räder auf eine Stützbahn übertragen wird. Eine Kette als Zugmittel läuft in einer U-förmigen Führung. Der Reibschuh am Werkstückträger wird federbelastet mit einer vorbestimmten Kraft auf das Zugmittel angepresst, während die Restlast durch die Räder des Werkstückträgers auf die Stützbahn übertragen wird. Es sind ferner Mittel zum Vermindern oder Aufheben er Reibung vorgesehen, die selbsttätig wirken, wenn ein Werkstückträger beispielsweise bei einem Stau auf einen anderen aufläuft.

Die bekannten Systeme beschreiben nicht ein Werkstückträgersystem mit Vorlauf- und Rücklaufstrecke in zwei Ebenen, welches mit nur einem Antrieb ein sicheres Umlenken der Werkstückträger mitsamt dem Zugmittel an den Umlenkpunkte sowie einen im Normalbetrieb definiertes Kraftschluss zwischen Zugmittel und Werkstückträger ermöglichen, bei gleichzeitig sicherem Betrieb im Staubetrieb. Es ist die Aufgabe der Erfindung, ein solches Werkstückträgersystem auszugestalten.

Die Erfindung löst diese Aufgabe mit den Merkmalen aus dem kennzeichnenden Teil des Patenanspruchs 1. Vorteilhafte Weiterbildungen sind in den abhängigen Ansprüchen beschrieben.

Ein Grundgedanke der Erfindung ist es, den Kraftschluss zwischen dem Werkstückträger und dem Zugmittel über eine Klemmung zu erreichen. Zu diesem Zweck weist der Zugschlitten eine Klemmvorrichtung mit mindestens einem oberen und einem unteren Klemmelement auf, zwischen denen das Zugmittel angeordnet ist. Mittels dieser Klemmelemente des Zugschlittens ist der Zugschlitten an das Zugmittel klemmbar. Die Klemmvorrichtung bewegt sich vollständig mit dem Zugschlitten mit, so dass im Normalbetrieb kein Verschleiß entsteht. Die Klemmvorrichtung ist so dimensioniert, dass die Klemmkraft ausreichend groß ist, damit das Zugmittel den Zugschlitten mitnehmen kann. Der Zugschlitten weist mindestens ein Federelement auf, welches eine Federkraft auf zumindest ein Klemmelement ausübt und somit die Klemmung bewirkt. Die Klemmkraft darf aus Sicherheitsgründen bei Betrieb ohne Schutzgehäuse nicht derart groß sein, dass Bedienpersonen, welche von den Werkstückträgern oder den sich darauf befindenden Werkstücken eingeklemmt werden, verletzt werden. In einer vorteilhaften Ausgestaltung weist der Zugwagen deshalb eine Einstellvorrichtung für das Einstellen der Vorspannung des Federelements auf.

Ein Klemmelement kann in einer bevorzugten Ausgestaltung ein drehbares Exzenterelement umfassen, welches eine insbesondere abgerundete Klemmfläche mit einem nicht konstanten Abstand zum Drehpunkt aufweist, welche mit dem Zugmittel im geklemmten Zustand in Kontakt ist. Die Verwendung eines Exzenterelements ermöglicht ein ruckfreies Öffnen und Schließen der Klemmung des Zugschlittens an das Zugmittel. Insbesondere durch die Verwendung einer abgerundeten Klemmfläche kann beim Anklemmen eine stetige Zunahme der Klemmkraft erreicht werden. Insbesondere kann des Weiteren das Federelement derart an das Exzenterelement ansetzen, dass die Federkraft eine Drehung des Exzenterelements in einer solchen Richtung bewirkt, dass die Klemmkraft erhöht wird. Als Gegenklemmelement kann ein unter dem Zugmittel angeordneten Bolzen oder eine Abkantung verwendet werden.

Wenn der Werkstückträger auf einen voranlaufenden Werkstückträger aufläuft, sollte der folgende auffahrende Werkstückträger der voranfahrenden Werkstückträger vom Zugmittel entkoppelt werden, damit sich die Vorschubkraft der gestauten Werkstückträger nicht aufsummiert. Aus diesem Grund weist der Werkstückträger im in Fahrtrichtung vorderen Bereich ein Betätigungselement auf, welches im Falle des Auflaufens des Werkstückträgers auf einen vorangehenden Werkstückträger die Klemmkraft verringert. Das Betätigungselement kann einen Betätigungskopf aufweisen, welcher im Falle des Auflaufens des Werkstückträgers auf einen vorangehenden Werkstückträger gegen eine Anlauffläche des vorangehenden Werkstückträgers läuft. Das Betätigungselement kann ferner eine Schubeinrichtung umfassen, an deren einem Ende der Betätigungskopf angeordnet ist, und welche insbesondere an deren anderem Ende an das Exzenterelement ansetzt. Auf diese Weise kann die Klemmung bei einem Stau gelöst werden. Die Schubeinrichtung kann des Weiteren eine Schubstange, welche an das Exzenterelement ansetzt, und ein Schwenkelement umfassen, an deren einem Ende der Betätigungskopf angeordnet ist, und die an deren anderem Ende mit der Schubstange in einer vertikalen Ebene verschwenkbar verbunden ist. Die hat den Vorteil, dass die Einklemmgefahr an den Umlenkpunkten verringert wird.

An den Stationen des Werkstückträgersystems müssen die Werkstückträger angehalten werden. Aus diesem Grund kann an dem Grundgerüst zumindest eine Stopvorrichtung angeordnet sein, welches ein Stopelement umfasst, Der Zugschlitten kann ein Ausrückelement aufweisen, welches, wenn das Ausrückelement gegen das Stopelement läuft, derart mit dem Stopelement zusammenwirkt, dass die Klemmkraft verringert wird und der Werkstückträger anhält. Das Stopelement kann derart verschiebbar oder verschwenkbar angeordnet sein, dass sie aus einer Stellung, in der sich das Stopelement mit einem Ausrückelement eines Zugschlittens im Eingriff befindet, in eine Stellung überführbar ist, in welcher sich das Stopelement nicht mit dem Ausrückelement im Eingriff befindet, so dass der Werkstückträger zur nächsten Station weiterbewegt werden kann. In einer vorteilhaften Ausgestaltung ist das Ausrückelement mit der Schubeinrichtung starr verbunden. Auf diese Weise bewirkt die Schubeinrichtung sowohl beim Auflaufen auf einen vorangehenden Werkstückträger als auch beim Stoppen an einer Station eine Verringerung der Klemmkraft.

Das Zugmittel wird mittels zwei Umlenkrollen umgelenkt, von denen zumindest eine angetrieben sein kann. Der Zugschlitten kann neben einem unter dem Zugmittel angeordneten Klemmelement mindestens ein weiteres unter dem Zugmittel laufendes Umlenkelement, insbesondere einen Bolzen aufweisen, welches zwischen dem Zugmittel und der Umlenkrolle angeordnet ist, wenn sich der Zugschlitten im Bereich einer Umlenkrolle befindet. Dadurch ist es möglich, die Vorschubkraft auf den horizontalen Strecken klein zu halten und trotzdem die Kraft für die Hubbewegung des Werkstückträgers aufzubringen. Eine verbesserte Wirkung wird erreicht, wenn die Umlenkrollen jeweils zumindest eine, insbesondere zwei, entlang des Umfangs der Umlenkrollen laufende Mitnahmeelemente bzw. Andrückelemente (z.B. Gummirundschnüre) aufweisen.

Damit nicht das gesamte Gewicht des Werkstücks und des Werkstückträgers auf dem Zugmittel lastet kann der Werkstückträger, insbesondere der Lastträger, Rollen aufweisen, welche auf einer Rollfläche des Grundgerüsts des Werkstückträgersystems laufen, und über welche die Gewichtskraft des aufliegenden Werkstücks auf das Grundgerüst geleitet wird. Die Rollfläche kann Bestandteil einer Führungsschiene sein, welche zugleich eine Führung des Werkstückträgers bewirkt.

Möglich Ausführungsbeispiele der Erfindung werden anhand der beigefügten Figuren beschrieben.

Es zeigen:
- Fig. 1: einen Ausschnitt Werkstückträgersystem in einer isometrischen Darstellung
- Fig. 2: das Werkstückträgersystem nach Fig. 1 mit zum Teil herausgenommenen Elementen
- Fig. 3: einen Ausschnitt des Werkstückträgers aus Fig. 1 in geschlossener Klemmstellung in einer Schnittansicht
- Fig. 4: den Werkstückträger nach Fig. 3 in offener Klemmstellung in einer Schnittansicht
- Fig. 5: den Werkstückträger nach Fig. 3 in einer Draufsicht mit zum Teil herausgenommenen Elementen
- Fig. 6: den Werkstückträger nach Fig. 4 in einer Draufsicht
- Fig. 7: den Werkstückträger nach Fig. 5 in einem erweiterten Ausschnitt
- Fig. 8: das Werkstückträgersystem aus Fig. 1 in einer isometrischen Schnittdarstellung
- Fig. 9: eine zweite Ausführung eines Werkstückträgersystems in einer Seitenansicht
- Fig. 10: das Werkstückträgersystem nach Fig. 9 in einer Schnittdarstellung
- Fig. 11: einen Werkstückträger nach Fig. 9 in geschlossener Klemmstellung in einer Seitenansicht
- Fig. 12: den Werkstückträger nach Fig. 11 in offener Klemmstellung in einer Seitenansicht
- Fig. 13: den Antriebskopf des Werkstückträgersystems nach Fig. 9
- Fig. 14: einen vergrößerten Ausschnitt des Werkstückträgersystems nach Fig. 13

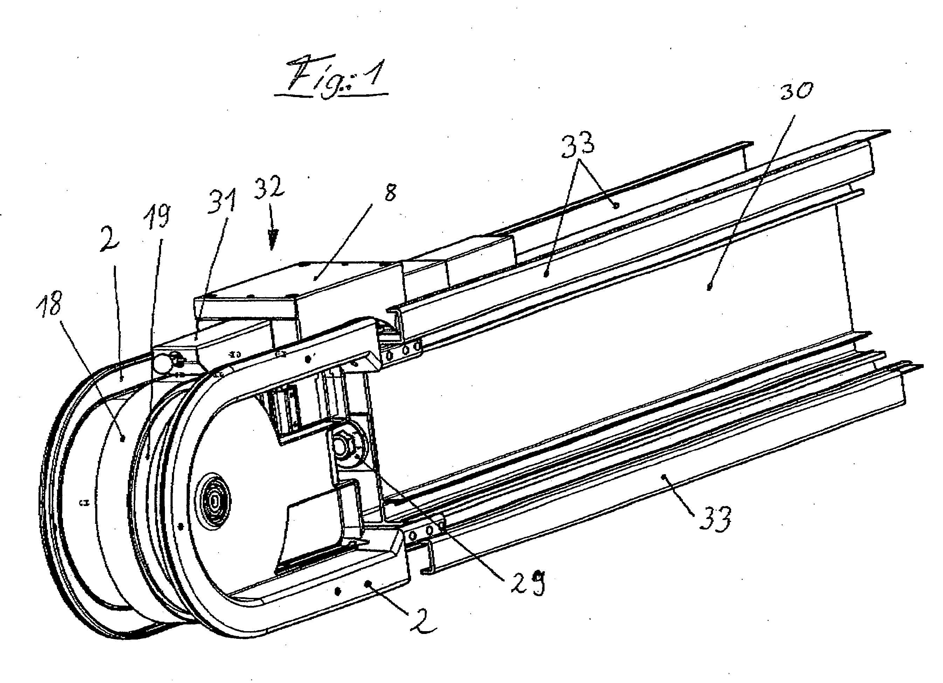

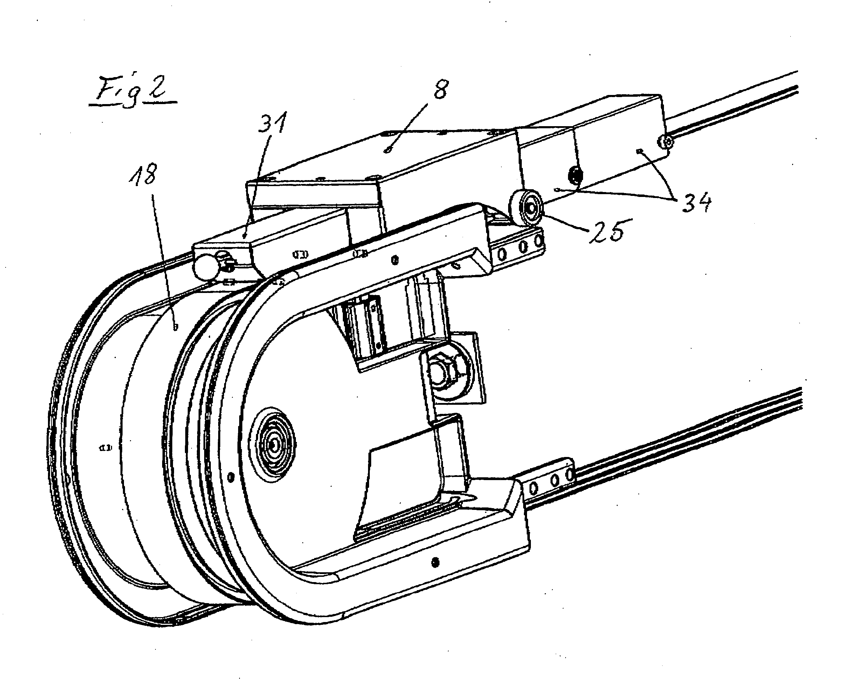

Die Figuren 1 bis 8 zeigen einen Ausschnitt einer ersten Ausführung eines Werkstückträgersystems, welches mehrere Werkstückträger bewegen kann. Das Werkstückträgersystem weist einen umlaufenden Riemen 18 auf, welcher in dem gezeigten Ausschnitt mittels der Umlenkrolle 19 umgelenkt wird. Eine zweite, nicht dargestellte Umlenkrolle ist am anderen Ende des Werkstückträgersystems angeordnet. Das angetriebene Band bewegt einen Werkstückträger 32, welcher einen Zugschlitten 31 sowie einen Lastträger 8 umfasst. Der Lastträger weist vier Rollen 34 auf, welche in der mit dem Grundgerüst 30 verbundenen, beiderseits des Riemens 18 angeordneten Führungsschienen 33 sowie den Umlenkwangen 2 laufen. In Figur 2 ist eine Rolle 25 auf Grund der aus der Zeichnung herausgenommen Führungsschienen 33 sichtbar. Über die Führungsschienen 33 kann die Gewichtskraft eines nicht dargestellten Werkstücks auf dem Werkstückträger 32 auf das Grundgerüst 30 geführt werden.

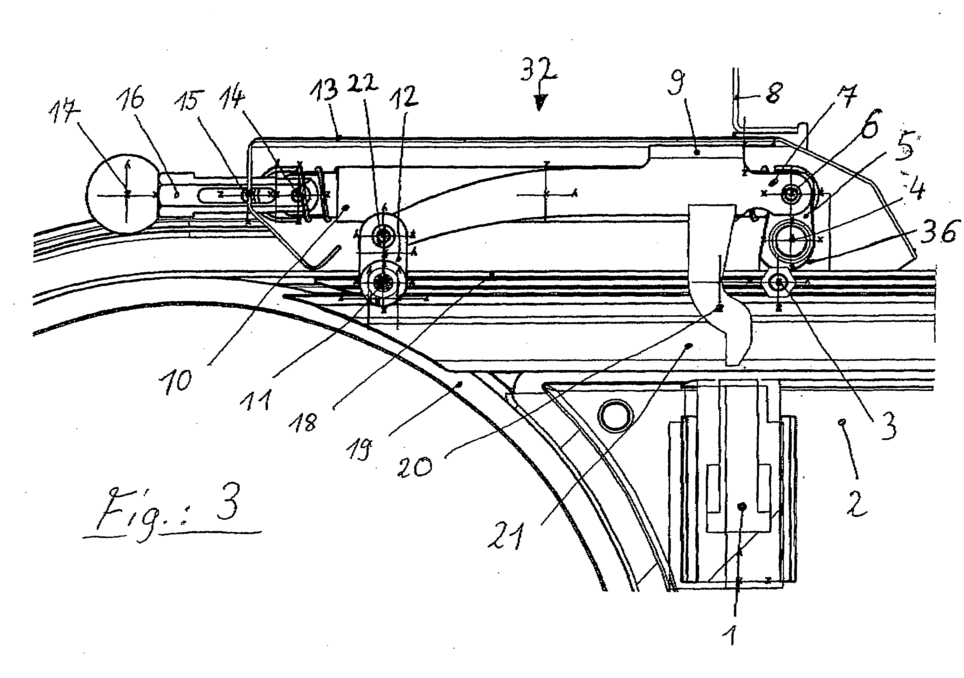

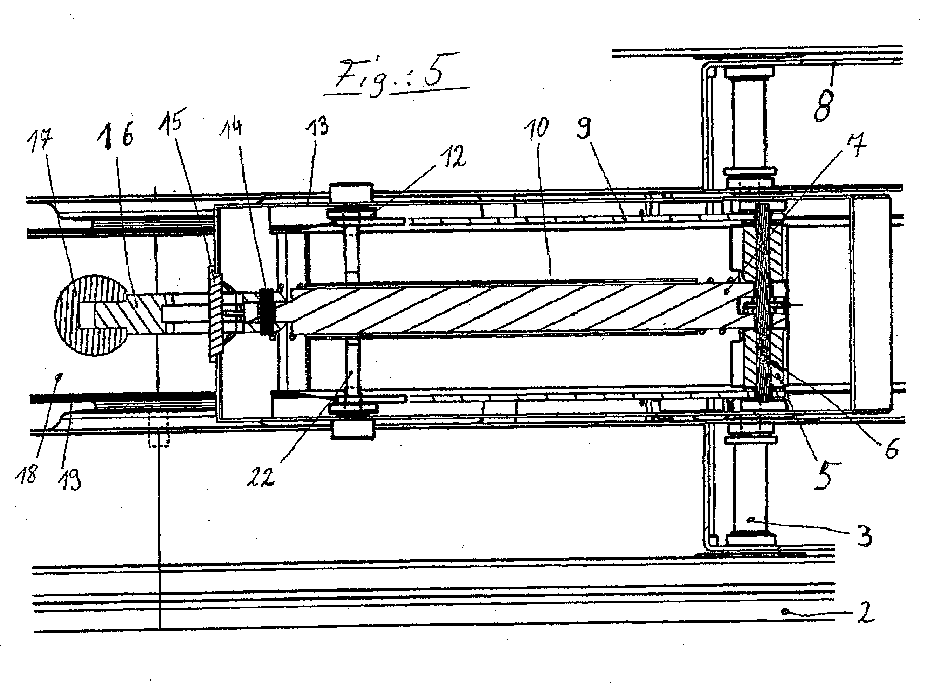

Die Fig. 3 zeigt einen Ausschnitt des Werkstückträgers 32 mit dem Lastträger 8 und dem Zugschlitten 31 in geschlossener Klemmstellung in einer Schnittansicht. Der Zugschlitten 31 weist eine Haube 13 auf. Der Zugschlitten 31 weist ferner eine Klemmvorrichtung auf, welche aus zwei Klemmelementen 3 und 5 besteht. Das obere Klemmelement 5 ist ein Exzenterelement, welches über den Exzenterhauptbolzen 4 drehbar gelagert ist. Das untere Klemmelement 3 ist ein Gegenbolzen. Zwischen der Klemmfläche 36 des Exzenterelements 5 und dem Gegenbolzen 3 befindet sich der Riemen 18. Der Lastträger 8 ist über den Gegenbolzen 3 mit dem Zugschlitten verbunden. Die Fig. 5 zeigt den Werkstückträger 32 in dieser Stellung in einer Draufsicht mit abgenommener Haube.

An dem Exzenterelement 5 setzt eine Schubstange 7 an. Auf das Exzenterelement 5 wirkt über die Schubstange 7 einer Schubeinrichtung die Federkraft eines Federelements 10, durch welche die Klemmkraft bewirkt wird. Das Federelement 10 wird durch die Haube 13 geführt und dort mittels eines Federgrundbolzens 15 verankert. Am vorderen Ende der Schubstange 7 ist ein Schwenkelement 16 angeordnet, welches über den Knickbolzen 14 mit der Schubstange 7 verschwenkbar verbunden ist. Am anderen Ende des Schwenkelements 16 ist ein Betätigungskopf 17 angeordnet. Wenn der Werkstückträger 32 auf einen vorangehenden Werkstückträger aufläuft, so wird die Schubstange 7 über den Betätigungskopf 17 und das Schwenkelement 16 entgegen der Kraft des Federelements 10 bewegt. Die Schubstange 7 bewirkt eine Drehung des Exzenterelements 5, so dass die Klemmkraft geringer wird. Es stellt sich ein Gleichgewicht zwischen der Klemmkraft und der Vorschubkraft ein. Die Schubstange 7 wirkt über den Betätigungsbolzen 6 mit dem Exzenterelement 5 zusammen. In einer nicht dargestellten Ausführung weist der Zugschlitten eine Einstellvorrichtung für das Einstellen der Vorspannung des Federelements auf.

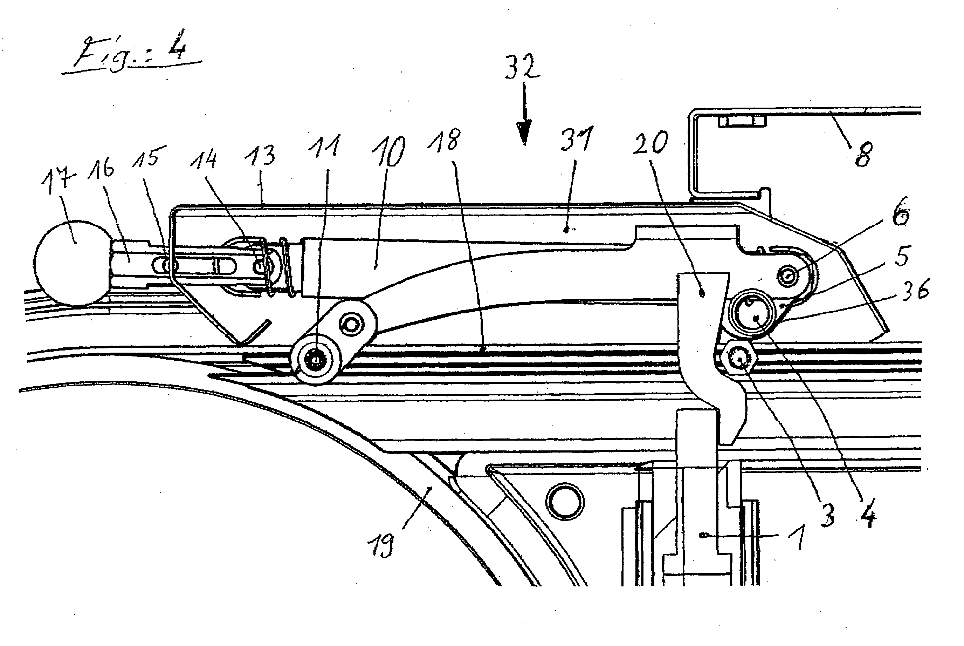

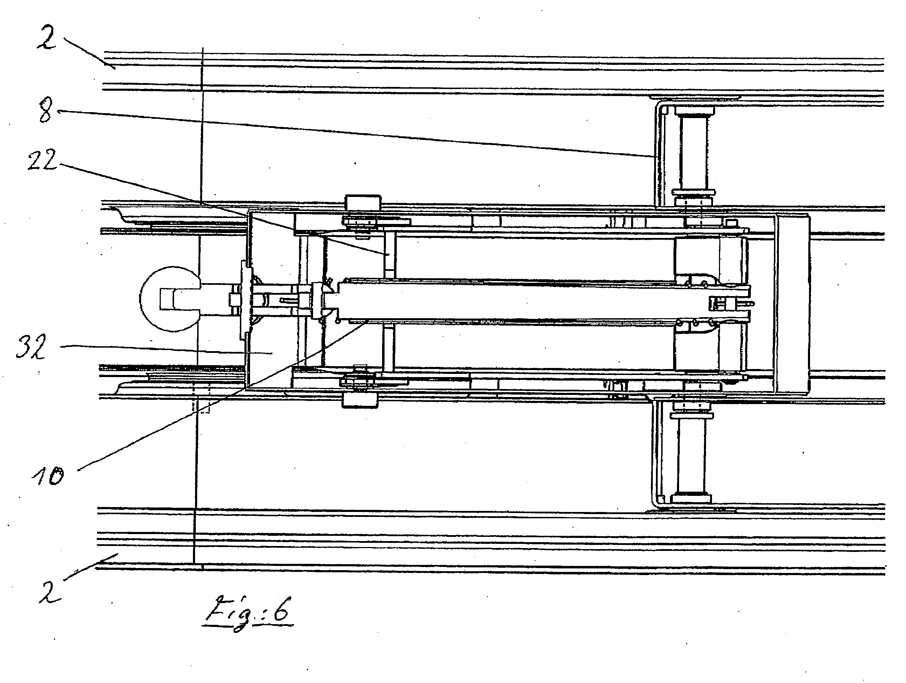

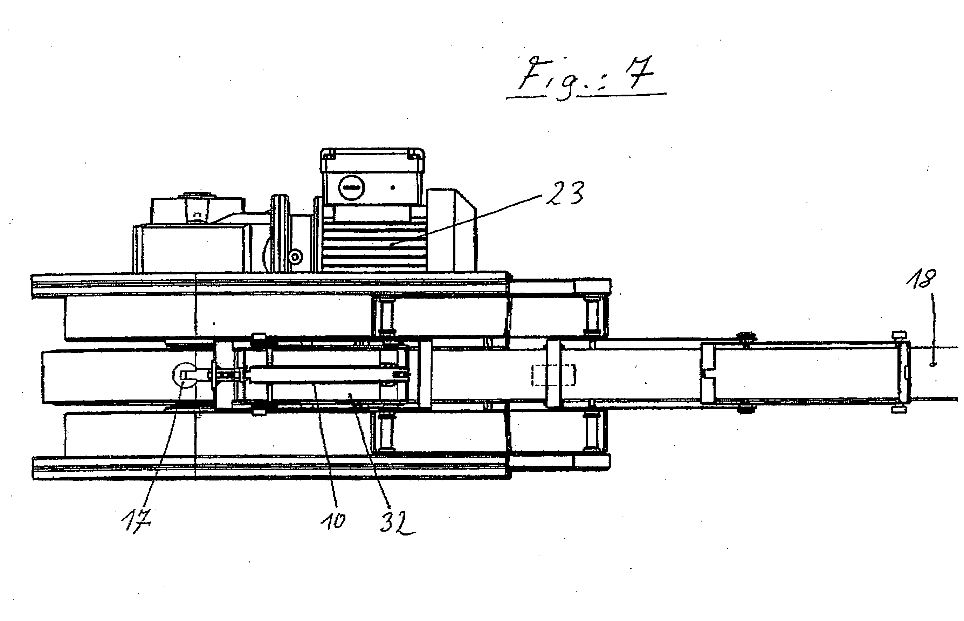

Die Fig. 4 zeigt den Werkstückträger 32 aus Fig. 3 in dieser offener Klemmstellung in einer Schnittansicht. Die Öffnung der Klemmung ist allerdings nicht durch ein Auflaufen auf einen vorangehenden Werkstückträger bewirkt, sondern durch das Stopelement 1, welches mit dem Grundgerüst 2 verbunden ist. Der Zugschlitten 31 weist ein Ausrückelement 20 auf, welcher mit dem Stopelement 1 zusammenwirkt. Das Ausrückelement 20 ist starr mit der Schubeinrichtung 36 verbunden. Wenn das Ausrückelement 20 gegen das Stopelement 1 läuft ,so wird die Klemmkraft verringert, d.h. es tritt die gleiche, bereits beschriebene Wirkung ein, wie wenn der Werkstückträger 32 auf einen vorhergehenden Werkstückträger aufläuft. Die Stopvorrichtung umfasst nicht dargestellte Mittel, um das Stopelement 1 derart zu verschwenken, dass es nicht mehr mit dem Ausrückelement 20 zusammenwirkt, so dass der Werkstückträger 32 freigegeben wird. Die Figuren 6 und 7 zeigen den Werkstückträger 32 in dieser Stellung in einer Draufsicht mit abgenommener Haube.

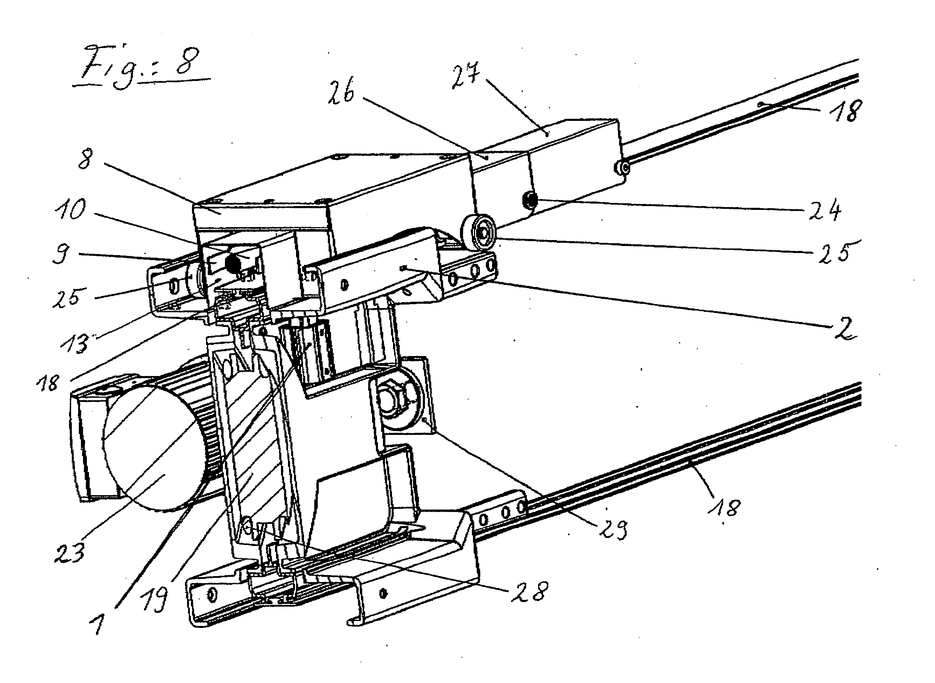

Die Fig. 8 zeigt das Werkstückträgersystem aus Fig. 1 in einer isometrischen Schnittdarstellung. Dargestellt ist die Umlenkrolle 19, welche vom Getriebemotor 23 angetrieben wird. Die Vorspannung des Riemens 18, welcher in einer Riemenführung 21 läuft, ist über das Spannelement 29 einstellbar. Die Umlenkrolle weist entlang ihres Umfangs zwei Ausnehmungen auf, in welchen zwei Gummirundschnüre laufen. Die Bolzen 3 und 11 des Zugschlittens 31 werden als Umlenkelemente im Bereich der Umlenkrolle zwischen dem Riemen 18 und den Gummirundschnüren eingeklemmt, so dass ein sicheres Umlenken der Werkstückträgers 32 mitsamt dem Riemen 18 ermöglicht wird. Der Werkstückträger 32 weist, wie in Fig. 2 dargestellt, zwei Anhängeelemente 34 auf, so dass beim Auflaufen eines Werkstückträgers dessen Betätigungskopf 17 gegen eine Anlauffläche des letzten Anhängeelements laufen kann.

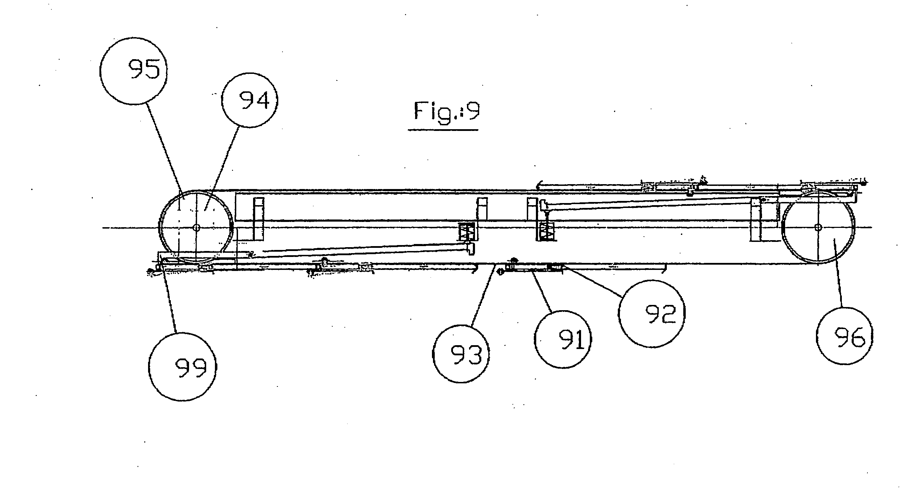

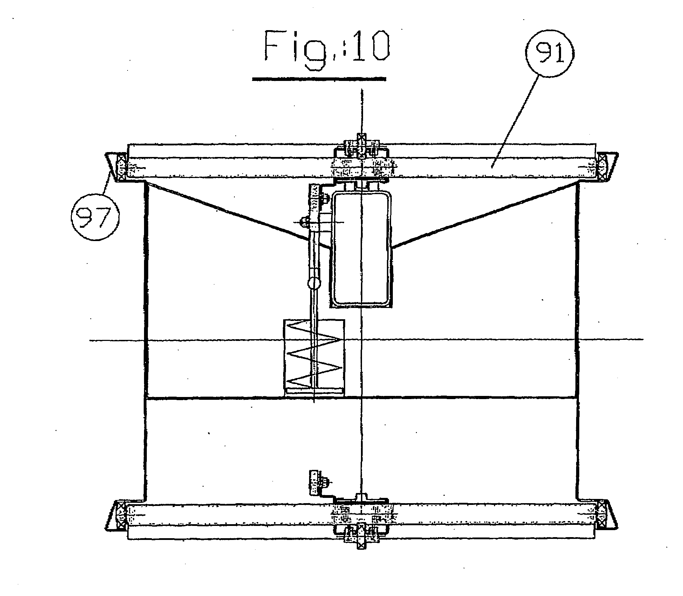

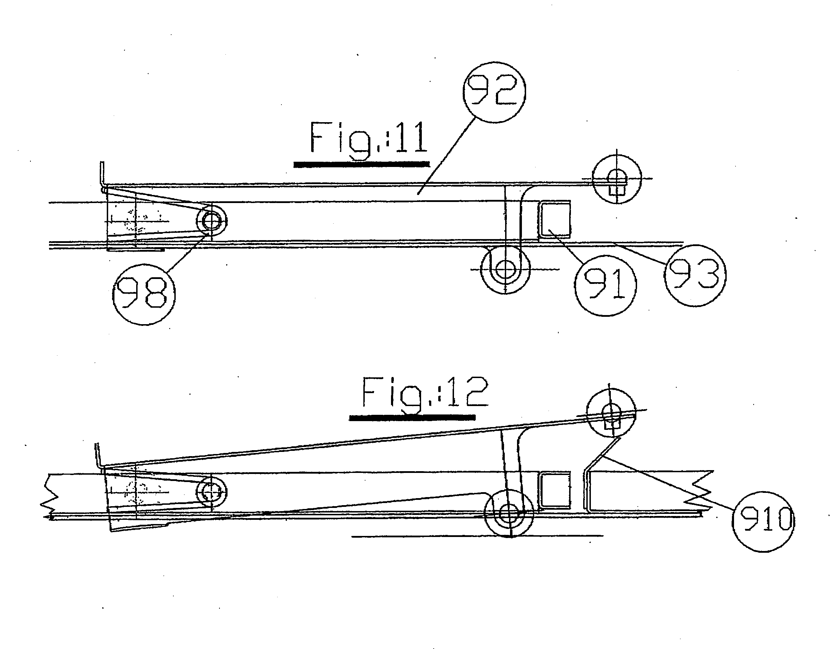

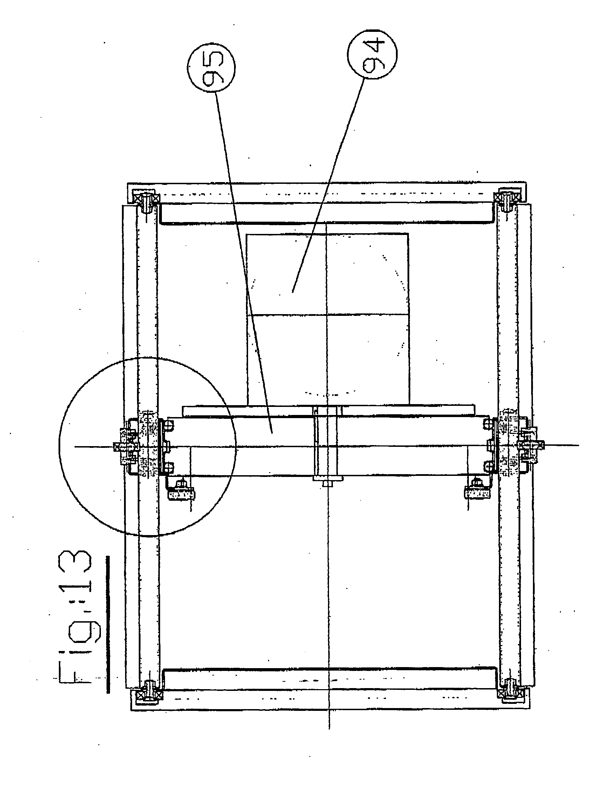

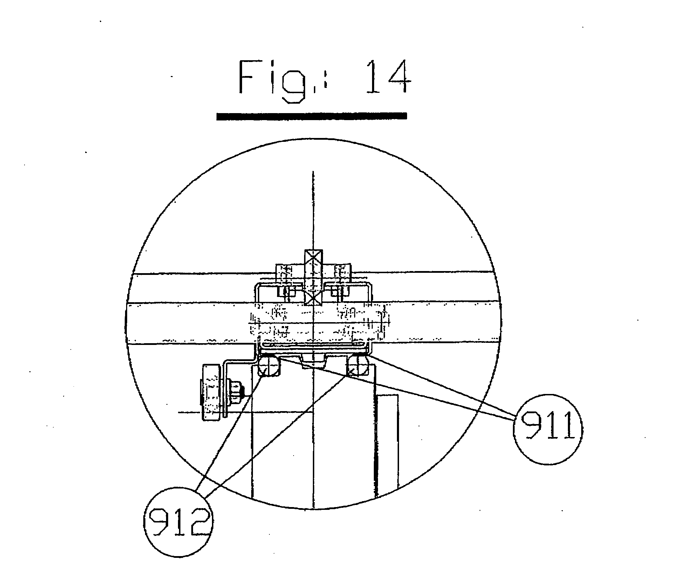

Die Figuren 9 bis 14 zeigen eine zweite Ausführung eines Werkstückträgersystems. Wenn man davon ausgeht, dass die Werkstückträger 91 einfach mittels Klemmung 92 an einem Zugträger 93 angetrieben werden, so kann der komplette Antrieb über einen Zugträger realisiert werden. Der geschlossene Zugträger, z.B. ein Flachriemen 93 wird über einen Motor 94 und Antriebsrolle 95 angetrieben und über eine Umlenkrollen 96 wiederzurückgeführt. Die Werkstückträger werden über Führungsbahnen 97 auf Spur gehalten. Über eine vorzugsweise mechanische Klemmung z.B. durch eine Feder 98 wird nun der angetriebene geklemmt und somit der Werkstückträger mitgeführt. Durch die Klemmkraft kann die Vorschubkraft eingestellt werden. Läuft der Werkstückträger nun gegen einen Stopper 99 oder die Anlaufschräge 910 des vorherigen Werkstückträgers auf, so wird die Klemmung automatisch gelöst und die Vorschubkraft minimiert. Fährt der Stopper oder der vorherige Werkstückträger weg so wird über die wieder aktive Klemmung Vortriebskraft übertragen. Am Ende der Förderstrecke wird der Zugträger umgelenkt. Das Umlenkrad ist dabei so ausgeführt, dass es nicht nur den Zugträger umlenkt, sondern über Form- und Kraftschluss zusätzlich den Werkstückträger antreibt. In diesem Beispiel wird z.B. die untere Kantung 911 der Klemmung selbst zwischen auf dem Umlenkrad montierten Gummirundschnur 912 und dem Zugträger 93 eingeklemmt und dadurch die Vorschubkraft erheblich vergrößert. Dadurch ist es möglich, die Vorschubkraft auf den horizontalen Strecken klein zu halten und trotzdem die Kraft für die Hubbewegung des Werkstückträgers aufzubringen. Nach der Umlenkung wird der Werkstückträger kopfüber wieder zurücktransportiert und dort wieder umgelenkt. Der wesentliche Vorteil ist, dass für dieses gesamte System nur ein Antrieb benötigt wird, die Werkstückträger gestaut und entkoppelt werden können und die Antriebskraft je Werkstückträger gering gehalten werden kann. Des Weiteren ist der Steuerungsaufwand wesentlich geringer, weil die Übersetzer nicht mehr nötig sind. Dadurch wird das System günstiger.

## Patentansprüche

1. Werkstückträgersystem mit einem angetriebenen, umlaufenden Zugmittel (18, 93), mit einem feststehenden Grundgerüst (30) und mit mindestens einem Werkstückträger (32, 91), welcher einen Lastträger (8) und einen Zugschlitten (31) aufweist, wobei
der Zugschlitten eine Klemmvorrichtung mit mindestens einem oberen und mindestens einem unteren Klemmelement (3,5, 911) aufweist, zwischen denen das Zugmittel angeordnet ist und mittels welcher der Zugschlitten an das Zugmittel klemmbar ist, **dadurch gekennzeichnet,**
a. **dass** der Zugschlitten (31) mindestens ein Federelement (10, 98) aufweist, welches eine Federkraft auf zumindest ein Klemmelement (3, 5) ausübt und die Klemmung bewirkt,
b. **dass** der Werkstückträger (32) im in Fahrtrichtung vorderen Bereich ein Betätigungselement (7, 16, 17) aufweist, welches im Falle des Auflaufens des Werkstückträgers auf einen vorangehenden Werkstückträger die Klemmkraft verringert und
c. **dass** das Zugmittel (18, 93) über zwei Umlenkrollen (19, 95, 96) geführt wird.

2. Werkstückträgersystem nach Anspruch 1, **dadurch gekennzeichnet, dass** der Zugschlitten (31) eine Einstellvorrichtung für das Einstellen der Vorspannung des Federelements (10) aufweist.

3. Werkstückträgersystem nach Anspruch 1 oder 2, **dadurch gekennzeichnet, dass** ein Klemmelement ein drehbares Exzenterelement (5) umfasst, welches eine insbesondere abgerundete Klemmfläche (36) mit einem nicht konstanten Abstand zum Drehpunkt aufweist, welche mit dem Zugmittel (18) im geklemmten Zustand in Kontakt ist.

4. Werkstückträgersystem nach Anspruch 3, **dadurch gekennzeichnet, dass** das Federelement (10) derart an das Exzenterelement (5) ansetzt, dass die Federkraft eine Drehung des Exzenterelements in einer solchen Richtung bewirkt, dass die Klemmkraft erhöht wird.

5. Werkstückträgersystem nach einem der vorhergehenden Anspruche, **dadurch gekennzeichnet, dass** ein Klemmelement (3) einen insbesondere unter dem Zugmittel angeordneten Bolzen umfasst.

6. Werkstückträgersystem nach einem der vorhergehenden Ansprüche, **dadurch gekennzeichnet, dass** das Betätigungselement (7, 16, 17) einen Betätigungskopf (17) umfasst, welcher im Falle des Auflaufens des Werkstückträgers (32) auf einen vorangehenden Werkstückträger gegen eine Anlauffläche des vorangehenden Werkstückträgers anstößt.

7. Werkstückträgersystem nach Anspruch 6, **dadurch gekennzeichnet, dass** das Betätigungselement (7, 16, 17) eine Schubeinrichtung (7, 16) umfasst, an deren einem Ende der Betätigungskopf (17) angeordnet ist, und welche insbesondere an deren anderem Ende an das Exzenterelement (5) ansetzt.

8. Werkstückträgersystem nach Anspruch 7, **dadurch gekennzeichnet, dass** die Schubeinrichtung (7, 16) eine Schubstange (7), welche an das Exzenterelement (5) ansetzt, und ein Schwenkelement (16) umfasst, an deren einem Ende der Betätigungskopf (17) angeordnet ist, und die an deren anderem Ende mit der Schubstange in einer vertikalen Ebene verschwenkbar verbunden ist.

9. Werkstückträgersystem nach einem der vorhergehenden Ansprüche, **dadurch gekennzeichnet, dass** an dem Grundgerüst (30) zumindest eine Stopvorrichtung angeordnet ist, welches ein Stopelement (1, 99) umfasst, und dass der Zugschlitten (31) ein Ausrückelement (20) aufweist, welches, wenn das Ausrückelement gegen das Stopelement läuft, derart mit dem Stopelement zusammenwirkt, dass die Klemmkraft verringert wird,

10. Werkstückträgersystem nach Anspruch 9, **dadurch gekennzeichnet, dass** das Stopelement (I) derart verschiebbar oder verschwenkbar angeordnet ist, dass sie aus einer Stellung, in der sich das Stopelement mit einem Ausrückelement (20) eines Zugschlittens (31) im Eingriff befindet, in eine Stellung überführbar ist, in welcher sich das Stopelement nicht mit dem Ausrückelement im Eingriff befindet.

11. Werkstückträgersystem nach Anspruch 9 oder 10, **dadurch gekennzeichnet, dass** das Ausrückelement (20) mit der Schubeinrichtung (7, 16) starr verbunden ist.

12. Werkstückträgersystem nach einem der vorhergehenden Ansprüche, **dadurch gekennzeichnet, dass** eine der Umlenkrollen (19, 95) angetrieben ist.

13. Werkstückträgersystem nach einem der vorhergehenden Ansprüche, **dadurch gekennzeichnet, dass** der Zugschlitten (31) mindestens ein unter dem Zugmittel (18) laufendes Umlenkelement (3, 11), insbesondere einen Bolzen aufweist, welches zwischen dem Zugmittel und der Umlenkrolle (19) angeordnet ist, wenn sich der Zugschlitten im Bereich einer Umlenkrolle befindet.

14. Werkstückträgersystem nach einem der vorhergehenden Ansprüche, **dadurch gekennzeichnet, dass** die Umlenkrollen (19, 95, 96) jeweils zumindest eine, insbesondere zwei, entlang des Umfangs der Umlenkrollen laufende Gummirundschnüre (28, 912) aufweisen.

15. Werkstückträgersystem nach einem der vorhergehenden Ansprüche, **dadurch gekennzeichnet, dass** der Werkstückträger (32), insbesondere der Lastträger (8), Rollen (25) aufweist, welche auf einer Rollfläche (2, 33, 97) des Grundgerüsts (2) des Werkstückträgersystems laufen, und über welche die Gewichtskraft des aufliegenden Werkstücks auf das Grundgerüst geleitet wird.

## Claims

1. A workpiece support system comprising driven, circulating traction means (18, 93), a stationary base frame (30) and at least one workpiece support (32, 91) consisting of a load carrier (8) and a traction slide (31), the traction slide including a clamping device with at least one upper and at least one lower clamping element (3, 5, 911) between which the traction means are located and by means of which the traction slide can be clamped to the traction means,
**characterized in that**
a. the traction slide (31) includes at least one spring element (10, 98) which exerts a spring force on at least one clamping element (3, 5) and produces the clamping action,
b. the workpiece support (32) has, at the front in direction of travel, an actuating element (7, 16, 17) which, in the event of the workpiece support colliding with a workpiece support in front of it, reduces the clamping force and
c. the traction means (18, 93) are guided over two guide rollers (19, 95, 96).

2. A workpiece support system according to Claim 1, **characterized in that** the traction slide (31) has an adjusting device for adjusting the initial tension of the spring element (10).

3. A workpiece support system according to Claim 1 or 2, **characterized in that** one clamping element comprises a rotatable eccentric element (5) including a clamping face (36) which is especially rounded off and is located at a not constant distance from the pivot, said clamping face (36) being in contact with the traction means (18) in the clamped state.

4. A workpiece support system according to Claim 3, **characterized in that** the spring element (10) fits on to the eccentric element (5) in such a way that the spring force results in a rotation of the eccentric element in such a direction as to increase the clamping force.

5. A workpiece support system according to one of the preceding claims, **characterized in that** one clamping element (3) comprises a bolt which is in particular located underneath the traction means.

6. A workpiece support system according to one of the preceding claims, **characterized in that** the actuating element (7, 16, 17) includes an actuating head (17) which, in the event of the workpiece support (32) colliding with a workpiece support in front of it, bumps against a stop face of said workpiece support located in front of it.

7. A workpiece support system according to Claim 6, **characterized in that** the actuating element (7, 16, 17) comprises a pusher device (7, 16), on one end of which the actuating head (17) is provided and its other end specifically fitting on to the eccentric element (5).

8. A workpiece support system according to Claim 7, **characterized in that** the pusher device (7, 16) comprises a push-rod (7) - which fits on to the eccentric element (5) - and a swivel element (16), the actuating head (17) being provided at one end of said swivel element (16) and the other end of said swivel element (16) being attached to the push-rod in such a way that it can swivel in a vertical plane.

9. A workpiece support system according to one of the preceding claims, **characterized in that**, on the base frame (30), at least one stop device is provided which comprises a stop element (1, 99), and **in that** the traction slide (31) includes a release element (20) which, when the release element butts against the stop element, cooperates with said stop element in such a way as to reduce the clamping force.

10. A workpiece support system according to Claim 9, **characterized in that** the stop element (1) is mounted so that it can be displaced or can swivel in such a way that it can move from a position in which the stop element is engaged with a release element (20) of a traction slide (31), into a position in which the stop element is not engaged with the release element (20).

11. A workpiece support system according to Claim 9 or 10, **characterized in that** the release element (20) is rigidly attached to the pusher device (7, 16).

12. A workpiece support system according to one of the preceding claims, **characterized in that** one of the guide rollers (19, 95) is driven.

13. A workpiece support system according to one of the preceding claims, **characterized in that** the traction slide (31) has at least one guide element (3, 11), in particular a bolt, running underneath the traction means (18) and located between the traction means and the guide roller (19) when the traction slide is in the region of a guide roller.

14. A workpiece support system according to one of the preceding claims, **characterized in that** the guide rollers (19, 95, 96) each have at least one, and in particular two, round rubber cords (28, 912) running along the circumference of said guide rollers.

15. A workpiece support system according to one of the preceding claims, **characterized in that** the workpiece support (32), in particular the load carrier (8), has rollers (25), which run on a rolling surface (2, 33, 97) of the base frame of the workpiece support system, the weight of the supported workpiece being transmitted to the base frame via said rollers (25).

## Revendications

1. Système de porte-pièces avec un mécanisme de traction (18, 93) rotatif entraîné, comprenant une structure de base fixe (30) et au moins un porte-pièces (32, 91), qui présente un porte-charge (8) et un chariot de traction (31), dans lequel
le chariot de traction présente un dispositif de serrage avec au moins un élément de serrage supérieur et au moins un élément de serrage inférieur (3, 5, 911), entre lesquels est aménagé le mécanisme de traction et au moyen desquels le chariot de traction peut être serré sur le mécanisme de traction, **caractérisé en ce que**
a) le chariot de traction (31) présente au moins un élément à ressort (10, 98) qui exerce une force élastique sur au moins un élément de serrage (3, 5) et provoque le serrage,
b) le porte-pièces (32) présente, dans la zone avant dans le sens de marche, un élément de commande (7, 16, 17) qui diminue la force de serrage dans le cas d'un impact du porte-pièces avec un porte-pièces précédent et
c) le mécanisme de traction (18, 93) est guidé via deux rouleaux de renvoi (19, 95, 96).

2. Système de porte-pièces selon la revendication 1, **caractérisé en ce que** le chariot de traction (31) présente un dispositif de réglage pour régler la précontrainte de l'élément à ressort (10).

3. Système de porte-pièces selon la revendication 1 ou 2, **caractérisé en ce qu'**un élément de serrage comprend un élément excentrique rotatif (5), qui présente une surface de serrage (36) en particulier arrondie avec un écart non constant par rapport au centre de rotation, qui est en contact à l'état serré avec le mécanisme de traction (18).

4. Système de porte-pièces selon la revendication 3, **caractérisé en ce que** l'élément à ressort (10) s'applique sur l'élément excentrique (5) de sorte que la force élastique assure une rotation de l'élément excentrique dans un sens tel que la force de serrage soit augmentée.

5. Système de porte-pièces selon l'une quelconque des revendications précédentes, **caractérisé en ce qu'**un élément de serrage (3) comprend un boulon aménagé en particulier sous le mécanisme de traction.

6. Système de porte-pièces selon l'une quelconque des revendications précédentes, **caractérisé en ce que** l'élément de commande (7, 16, 17) comprend une tête de commande (17) qui, dans le cas de l'impact du porte-pièces (32) avec un porte-pièces précédent, heurte une surface d'arrêt du porte-pièces précédent.

7. Système de porte-pièces selon la revendication 6, **caractérisé en ce que** l'élément de commande (7, 16, 17) comprend un dispositif de poussée (7, 16), à l'une des extrémités duquel est aménagée la tête de commande (17) et qui s'applique, en particulier à l'autre extrémité, sur l'élément excentrique (5).

8. Système de porte-pièces selon la revendication 7, **caractérisé en ce que** le dispositif de poussée (7, 16) comprend une bielle de poussée (7), qui s'applique sur l'élément excentrique (5), et un élément pivotant (16), à l'une des extrémités duquel est aménagée la tête de commande (17) et qui est raccordé à pivotement dans un plan vertical, à l'autre extrémité, à la bielle de poussée.

9. Système de porte-pièces selon l'une quelconque des revendications précédentes, **caractérisé en ce qu'**il est aménagé sur la structure de base (30) au moins un dispositif d'arrêt, qui comprend un élément d'arrêt (1, 99) et **en ce que** le chariot de traction (31) présente un élément de désaccouplement (20) qui, lorsqu'il opère contre l'élément d'arrêt, coopère avec l'élément d'arrêt de sorte que la force de serrage soit diminuée.

10. Système de porte-pièces selon la revendication 9, **caractérisé en ce que** l'élément d'arrêt (1) est aménagé à coulissement ou à pivotement de sorte qu'il puisse être transféré d'une position, dans laquelle l'élément d'arrêt est en prise avec un élément de désaccouplement (20) d'un chariot de traction (31), à une position dans laquelle l'élément d'arrêt n'est pas en prise avec l'élément de désaccouplement.

11. Système de porte-pièces selon la revendication 9 ou 10, **caractérisé en ce que** l'élément de désaccouplement (20) est raccordé de manière rigide au dispositif de poussée (7, 16).

12. Système de porte-pièces selon l'une quelconque des revendications précédentes, **caractérisé en ce que** l'un des rouleaux de renvoi (19, 95) est entraîné.

13. Système de porte-pièces selon l'une quelconque des revendications précédentes, **caractérisé en ce que** le chariot de traction (31) présente au moins un élément de renvoi (3, 11) opérant sous le mécanisme de traction (18), en particulier un boulon, qui est aménagé entre le mécanisme de traction et le rouleau de renvoi (19), lorsque le chariot de traction se trouve dans la zone d'un rouleau de renvoi.

14. Système de porte-pièces selon l'une quelconque des revendications précédentes, **caractérisé en ce que** les rouleaux de renvoi (19, 95, 96) présentent chaque fois au moins un, en particulier deux cordons ronds en caoutchouc (28, 912) s'étendant le long de la périphérie des rouleaux de renvoi.

15. Système de porte-pièces selon l'une quelconque des revendications précédentes, **caractérisé en ce que** le porte-pièces (32), en particulier le porte-charge (8), présente des rouleaux (25) qui s'étendent sur une surface de roulement (2, 33, 97) de la structure de base (2) du système de porte-pièces et par le biais desquels le poids de la pièce supportée est guidée sur la structure de base.
